# EUROPEAN PATENT APPLICATION

(11) **EP 4 503 687 A1**
(43) Date of publication of application: **05.02.2025**
(21) Application number: 23829640.4
(22) Date of filing: 20.04.2023
(51) Int. Cl.: H04W 8/18

(54) **PROCESSING METHOD AND APPARATUS FOR SERVICE DATA PACKET, AND MEDIUM AND ELECTRONIC DEVICE**

(30) Priority: 28.06.2022 CN 202210741295
(71) Applicant: Tencent Technology (Shenzhen) Company Limited, Shenzhen, Guangdong 518057 (CN)
(72) Inventor: LEI, Yixue, Shenzhen, Guangdong 518057 (CN)
(74) Representative: Reddie & Grose LLP
(86) International application number: PCT/CN2023/089410
(87) International publication number: WO 2024/001451

(57) **Abstract**

Provided in the embodiments of the present application are a processing method and apparatus for a service data packet, and a medium and an electronic device. The processing method for a service data packet comprises: receiving characteristic auxiliary data for a specified service flow, which data is sent by means of an application-side network element, wherein the characteristic auxiliary data comprises data associated with the characteristics of the specified service flow; performing characteristic parameter speculations according to the characteristic auxiliary data, so as to obtain a target characteristic parameter of the specified service flow; and processing a service data packet of the specified service flow according to the target characteristic parameter, which is obtained by means of speculations. By means of the technical solution of the embodiments of the present application, a network-side network element can determine characteristic parameters of a service flow under the assistance of an application-side network element, thereby improving the accuracy of the determined characteristic parameters of the service flow, thus facilitating optimization of the transmission of the service flow, and improving the processing efficiency of a service data packet.

## Description

### RELATED APPLICATION

This application claims priority to Chinese Patent Application No. 202210741295.2, filed with the China National Intellectual Property Administration on June 28, 2022 and entitled "SERVICE DATA PACKET PROCESSING METHOD AND APPARATUS, MEDIUM, AND ELECTRONIC DEVICE", which is incorporated herein by reference in its entirety.

### FIELD OF THE TECHNOLOGY

This application relates to the field of computer and communication technologies, and specifically, to a service data packet processing method and apparatus, a medium, and an electronic device.

### BACKGROUND OF THE DISCLOSURE

In 5G and evolved 5G systems, high-bandwidth interactive services are an important service type, for example, cloud gaming, virtual reality (VR), augmented reality (AR), mixed reality (MR), extended reality (XR), and cinematic reality (CR).

The high-bandwidth interactive services have high requirements for timeliness of transmission, and with improvement of indexes such as resolution, a frame rate, and a degree of freedom, a data volume generated by an application layer also significantly increases. Therefore, data packet content generated by application layers of the services needs to be split into a large number of data packets for segmented transmission at a very low delay. However, how to ensure efficient processing of the data packets during segmented transmission is a technical problem that needs to be resolved urgently.

### SUMMARY

Embodiments of this application provide a service data packet processing method and apparatus, a medium, and an electronic device, so that processing efficiency of a service data packet can be improved.

Other features and advantages of this application become apparent through the following detailed descriptions or partially learned through practice of this application.

According to a first aspect, an embodiment of this application provides a service data packet processing method, performed by a network-side network element, the processing method including: receiving characteristic assistance data transmitted by an application-side network element for a specified service flow, the characteristic assistance data including data associated with a characteristic of the specified service flow; performing characteristic parameter inference characteristic parameter inference based on the characteristic assistance data, to obtain a target characteristic parameter of the specified service flow; and processing a service data packet of the specified service flow based on the inferred target characteristic parameter.

According to a second aspect, an embodiment of this application provides a service data packet processing method, performed by an application-side network element, the processing method including: obtaining, based on feature information of a specified service flow, an initial characteristic parameter of the specified service flow; generating, based on the obtained initial characteristic parameter, characteristic assistance data for the specified service flow, the characteristic assistance data including data associated with a characteristic of the specified service flow; and transmitting the characteristic assistance data to a network-side network element, the characteristic assistance data being configured for assisting the network-side network element in performing characteristic parameter inference to obtain a target characteristic parameter of the specified service flow.

According to a third aspect, an embodiment of this application provides a service data packet processing apparatus, arranged in a network-side network element, the processing apparatus including: a receiving unit, configured to receive characteristic assistance data transmitted by an application-side network element for a specified service flow, the characteristic assistance data including data associated with a characteristic of the specified service flow; an inference unit, configured to perform characteristic parameter inference characteristic parameter inference based on the characteristic assistance data, to obtain a target characteristic parameter of the specified service flow; and a processing unit, configured to process a service data packet of the specified service flow based on the inferred target characteristic parameter.

According to a fourth aspect, an embodiment of this application provides a service data packet processing apparatus, arranged in an application-side network element, the processing apparatus including: an obtaining unit, configured to obtain, based on feature information of a specified service flow, an initial characteristic parameter of the specified service flow; a generation unit, configured to generate, based on the obtained initial characteristic parameter, characteristic assistance data for the specified service flow, the characteristic assistance data including data associated with a characteristic of the specified service flow; and a transmission unit, configured to transmit the characteristic assistance data to a network-side network element, the characteristic assistance data being configured for assisting the network-side network element in performing characteristic parameter inference to obtain a target characteristic parameter of the specified service flow.

According to a fifth aspect, an embodiment of this application provides a computer-readable medium, having a computer program stored therein, the computer program, when executed by a processor, implementing the service data packet processing method according to the foregoing embodiments.

According to a sixth aspect, an embodiment of this application provides an electronic device, including one or more processors; and a memory, configured to store one or more computer programs, the one or more computer programs, when executed by the one or more processors, causing the electronic device to implement the service data packet processing method according to the foregoing embodiments.

According to a seventh aspect, an embodiment of this application provides a computer program product, including a computer program, the computer program being stored in a computer-readable storage medium, and a processor of an electronic device reading and executing the computer program from the computer-readable storage medium, to cause the electronic device to perform the service data packet processing method according to the foregoing embodiments.

In technical solutions provided in some embodiments of this application, an application-side network element transmits characteristic assistance data for a specified service flow to a network-side network element, where the characteristic assistance data is obtained based on an initial characteristic parameter that can be obtained by the application-side network element, so that the network-side network element can perform characteristic parameter inference based on the characteristic assistance data of the specified service flow, to obtain a target characteristic parameter of the specified service flow, where the target characteristic parameter is a complete characteristic parameter of the specified service flow, so that the network-side network element can process, based on the inferred characteristic parameter, a service data packet of the specified service flow. It can be seen that, in the technical solutions of the embodiments of this application, the network-side network element can determine a characteristic parameter of a service flow under assistance of the application-side network element, thereby improving accuracy of the determined characteristic parameter, facilitating optimization of transmission of the service flow, and improving processing efficiency of the service data packet. This avoids large dependence on the application-side network element due to a fact that the characteristic parameter of the service flow is provided by the application-side network element alone, and also avoids inaccuracy of the characteristic parameter due to a fact that inference is performed by the network-side network element alone.

The foregoing general descriptions and the following detailed descriptions are merely exemplary and explanatory, and cannot limit this application.

### BRIEF DESCRIPTION OF THE DRAWINGS

FIG. 1 is a schematic diagram of an exemplary system architecture in which the technical solutions of embodiments of this application can be applied.
FIG. 2 is a schematic diagram of a transmission process of a multimedia data packet according to an embodiment of this application.
FIG. 3 is a flowchart of a service data packet processing method according to an embodiment of this application.
FIG. 4 is a flowchart of a service data packet processing method according to an embodiment of this application.
FIG. 5 is a flowchart of a service data packet processing method according to an embodiment of this application.
FIG. 6 is a flowchart of a service data packet processing method according to an embodiment of this application.
FIG. 7 is a block diagram of a service data packet processing apparatus according to an embodiment of this application.
FIG. 8 is a block diagram of a service data packet processing apparatus according to an embodiment of this application.
FIG. 9 is a schematic structural diagram of a computer system of an electronic device configured to implement the embodiments of this application.

### DESCRIPTION OF EMBODIMENTS

Exemplary implementations are now described more thoroughly with reference to the accompanying drawings. However, the exemplary implementations can be implemented in various forms, and are not to be understood as being limited to the examples. On the contrary, the implementations are provided to make this application more thorough and complete, and fully convey the idea of the exemplary implementations to a person skilled in the art.

In addition, features, structures, or characteristics described in this application may be combined in one or more embodiments in any appropriate manner. In the following descriptions, a lot of specific details are provided to give a comprehensive understanding of the embodiments of this application. However, a person skilled in the art is to be aware that, technical solutions of this application may be implemented without using all detailed features in the embodiments, one or more particular details may be omitted, or other methods, elements, apparatuses, or operations may be used.

The block diagrams shown in the accompanying drawings are merely functional entities, and do not necessarily correspond to physically independent entities. To be specific, the functional entities may be implemented in a software form, or implemented in one or more hardware modules or integrated circuits, or implemented in different networks and/or processor apparatuses and/or microcontroller apparatuses.

The flowcharts shown in the accompanying drawings are merely exemplary descriptions, do not need to include all content and operations, and do not need to be performed in the described orders either. For example, some operations may be further divided, and some operations may be combined or partially combined. Therefore, an actual execution order may change based on an actual case.

"Plurality of' mentioned in the specification means two or more. "And/or" describes an association relationship of associated objects, indicating that three relationships may exist. For example, A and/or B may indicate the following three cases: Only A exists, both A and B exist, and only B exists. The character "/" generally indicates an "or" relationship between the associated objects.

With development of fifth generation mobile communication technology (5G), many multimedia services requiring more data volumes and short delays are applied. For example, interactive services such as a cloud gaming service, VR, AR, MR, XR, and CR are applied.

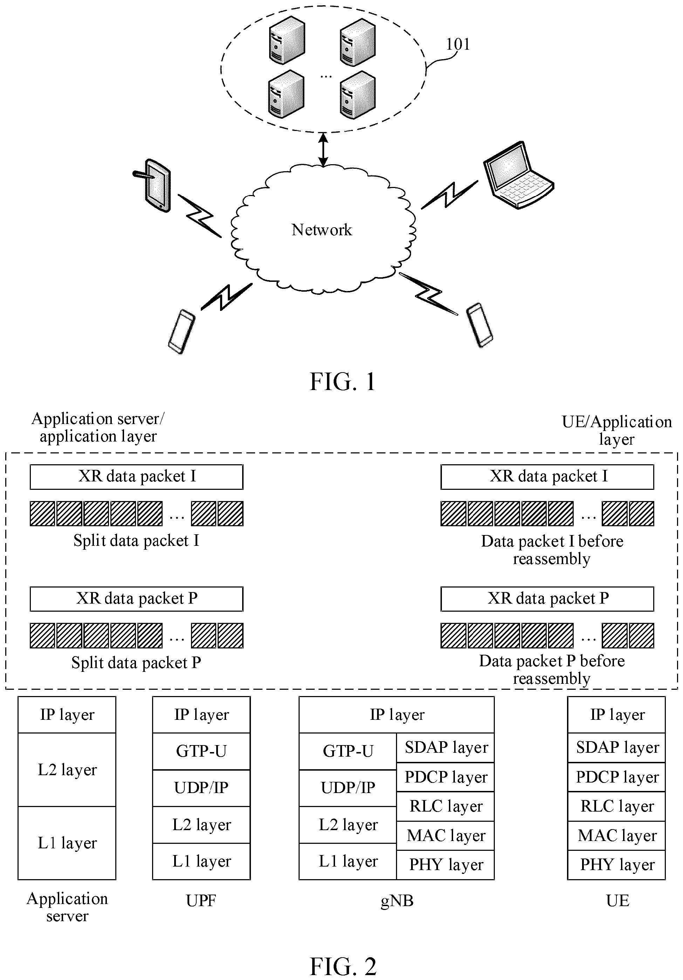

For example, in a cloud gaming scenario shown in FIG. 1, a cloud server 101 is configured to run a cloud game. The cloud server 101 can render a game picture, perform encoding processing on an audio signal and a rendered image, and finally transmit encoded data obtained through encoding processing to each game client through a network. A game client may be user equipment (UE) with a basic streaming media playback capability, a human-computer interaction capability, a communication capability, and the like, such as a smart phone, a tablet computer, a notebook computer, a desktop computer, a smart television, a smart home, an in-vehicle terminal, or an aircraft; or the game client may be an application program running in a terminal device. Specifically, the game client may decode the encoded data transmitted by the cloud server 101, to obtain analog audio and video signals and play the analog audio and video signals.

FIG. 1 is merely an exemplary system architecture representing a cloud gaming system, and does not limit a specific architecture of the cloud gaming system. For example, in another embodiment, the cloud gaming system may further include a back-end server for scheduling, or the like. In addition, the cloud server 101 may be an independent physical server, or may be a server cluster formed by a plurality of physical servers or a distributed system, or may be a cloud server providing basic cloud computing services, for example, a cloud service, a cloud database, cloud computing, a cloud function, cloud storage, a network service, cloud communication, a middleware service, a domain name service, a security service, a content delivery network (CDN), and a big data and artificial intelligence platform. The game client and the cloud server 101 may be directly or indirectly connected in a wired or wireless communication manner. This is not limited in this application.

In various multimedia-based interactive service application scenarios, because a multimedia data packet is huge, during transmission, a plurality of data packets needs to be split into for transmission. Specifically, as shown in FIG. 2, in a 5G system, a user plane mainly includes an application server, a user plane function (UPF), a next generation node (gNB), and user equipment (UE). Transmission of the multimedia data packet is mainly in a downlink direction for some typical service scenarios. For example, the multimedia data packet is transmitted from the application server to the UPF, and then transmitted to the UE through the gNB. During transmission, the multimedia data packet (using an XR data packet as an example in FIG. 2) is split at an application layer of the application server. After a split data packet is used as an IP packet to reach the UPF from the application server, the 5G system transmits sub-data packets to a UE end through a protocol data unit (PDU) session, and at the UE end, the sub-data packets are submitted step by step upward from a protocol stack and reassembled to recover the multimedia data packet. Because a data packet is generated in a service scenario, the data packet may be referred to as a service data packet.

In the system shown in FIG. 2, an L1 layer refers to a physical layer, and is configured to ensure that original data can be transmitted over various physical media; an L2 layer refers to a data link layer, and the data link layer provides services for a network layer based on services provided by the physical layer; and an Internet protocol (IP) layer is the network layer, and is configured to implement data transmission between two end systems; UDP stands for a user datagram protocol; GTP-U stands for a general packet radio service (GPRS) tunneling protocol; PHY stands for physical; MAC stands for media access control; RLC stands for radio link control; PDCP stands for a packet data convergence protocol; and SDAP stands for a service data adaptation protocol.

As described above, for the multimedia services, it is common to divide one frame of the multimedia data packet into a plurality of data packets for transmission. However, when the data packets are transmitted in a network, the network does not distinguish an association relationship between the data packets, and cannot refer to the association relationship when a packet is lost during network congestion. In addition, it is unclear whether the data packets are of equal importance and whether some data packets are recoverable after being lost, and the like, and lack of such information leads to blindness in processing received data packets by a network-side network element.

For example, if some data packets are lost, an entire frame, a group of pictures (GoP), or other video content cannot be decoded. In this case, remaining data packets are also to be discarded. On the contrary, if the received data packets may still be depended on for recovery after some data packets are discarded, the received data packets do not need to be discarded. In addition, periodicities exist in some XR and media services (XRM) service flows. Based on the periodicities, a wireless network may improve time-frequency resource efficiency during scheduling and transmission, for example, based on periodicities of XRM services, a semi-persistent scheduling (SPS) or connected-discontinuous reception (C-DRX) mechanism is used.

In related technologies, to cause the network-side network element to obtain a characteristic parameter of a service flow, generally, the characteristic parameter may be provided by an application-side network element to the network-side network element. However, this manner has a very high requirement for the application-side network element. For example, the application-side network element is required to be capable of providing whether a periodicity exists in a characteristic of the service flow, whether a correlation exists between service data packets, and the like. However, in actual deployment, it is often difficult for the application-side network element to fully provide such information. In the related technologies, there is also a solution that does not depend on the application-side network element to provide the characteristic of the service flow, but merely depends on the network-side network element for inference. However, the solution has some blindness and inaccuracy. In addition, continuously performing characteristic guessing on the service flow also causes an increase in a network-side processing algorithm. For example, if such an inference mechanism is run at a gateway node such as the UPF of a 5G network, a load of the gateway node is increased, possibly affecting a throughput, operation efficiency, and the like of the entire 5G network system.

Based on the existing problems, the embodiments of this application provide a new service data packet processing solution, so that an application-side network element can provide a part of characteristic parameters of a service flow to a network-side network element, and the network-side network element infers, based on an indication of the part of characteristic parameters, remaining characteristic parameters through an artificial intelligence (AI) method, to implement processing of data of a multimedia service such as XR.

In an embodiment of this application, the network-side network element may specifically perform characteristic parameter inference by using a machine learning (ML) method in the AI.

Implementation details of the technical solutions of the embodiments of this application are described in detail below.

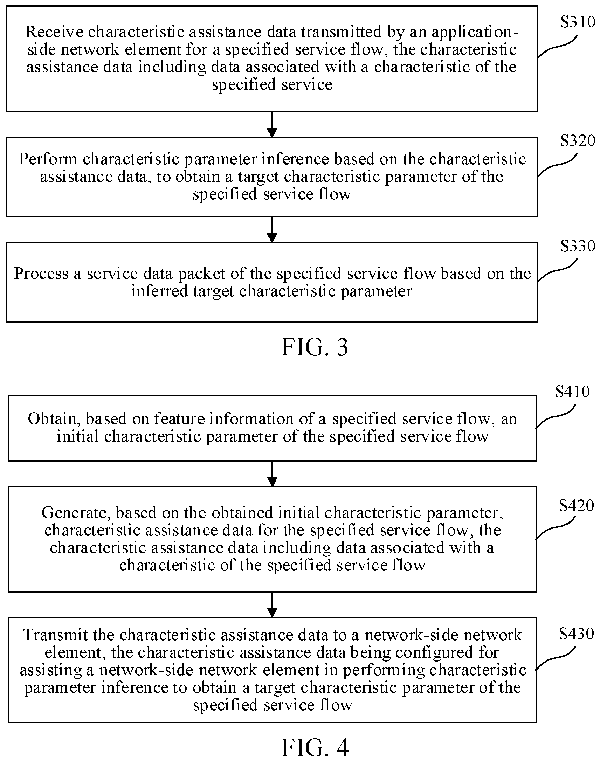

FIG. 3 is a flowchart of a service data packet processing method according to an embodiment of this application. The service data packet processing method may be performed by a network-side network element, and the network-side network element may be, for example, a policy control function (PCF). Refer to FIG. 3. The service data packet processing method may include S310 to S330. Detailed descriptions are as follows.

S310: Receive characteristic assistance data transmitted by an application-side network element for a specified service flow, the characteristic assistance data including data associated with a characteristic of the specified service flow.

In some embodiments, the characteristic assistance data is used by the network-side network element to determine a characteristic parameter of the specified service flow, for example, may include a part of characteristic parameters of the specified service flow, or may include indication information configured for determining the characteristic parameter of the specified service flow.

The characteristic assistance data may be configured for indicating whether a periodicity exists in the specified service flow. If the periodicity exists, the characteristic assistance data may further include a specific value of the periodicity or an interval in which the periodicity is located, or may further include whether data volumes transmitted in different periodicities are equal.

The characteristic assistance data may be configured for indicating whether a corresponding transmission rate exists in the specified service flow. If the transmission rate exists, the transmission rate may be a rate range, an average transmission rate, or the like.

The characteristic assistance data may be configured for indicating whether a constant frame rate exists in the specified service flow. If the constant frame rate exists, the characteristic assistance data may further include a specific value of the frame rate, an interval in which the frame rate is located, or the like.

The characteristic assistance data may be configured for indicating whether a constant key frame interval exists in the specified service flow. If the constant key frame interval exists, the characteristic assistance data may further include a specific value of the key frame interval, an interval in which the key frame interval is located, or the like.

The characteristic assistance data may be configured for indicating whether a service data packet set (that is, a PDU set) having an association exists in the specified service flow. If the PDU set exists, the characteristic assistance data may further include whether service data packets in the PDU set are of equal importance, whether content corresponding to the PDU set is recoverable after part of the service data packets in the PDU set are lost, and the like.

Still refer to FIG. 3. S320: Perform characteristic parameter inference characteristic parameter inference based on the characteristic assistance data, to obtain a target characteristic parameter of the specified service flow.

The target characteristic parameter may be a complete characteristic parameter required for processing a service data packet. In many cases, all characteristic parameters and corresponding values may be included. In some embodiments, the target characteristic parameter of the specified service flow obtained through inference based on the characteristic assistance data may include a periodicity of a service data packet corresponding to the specified service flow. For example, the characteristic assistance data indicates whether the periodicity exists in the specified service flow. If the characteristic assistance data indicates that the periodicity exists, the specific value of the periodicity or the interval in which the periodicity is located may be further obtained through inference. Certainly, whether the data volumes transmitted in the different periodicities are equal may be further obtained through inference.

In some embodiments, the target characteristic parameter of the specified service flow obtained through inference based on the characteristic assistance data may include a transmission rate of the service data packet corresponding to the specified service flow. For example, the characteristic assistance data indicates whether the transmission rate exists in the specified service flow. If the characteristic assistance data indicates that the transmission rate exists, the rate range of the transmission rate, the average transmission rate, or the like may be further obtained through inference.

In some embodiments, the target characteristic parameter of the specified service flow obtained through inference based on the characteristic assistance data may include a frame rate of a service data packet corresponding to the specified service flow. For example, the characteristic assistance data indicates whether the constant frame rate exists in the specified service flow. If the characteristic assistance data indicates that the constant frame rate exists, the specific value of the frame rate, the interval in which the frame rate is located, or the like may be further obtained through inference.

In some embodiments, the target characteristic parameter of the specified service flow obtained through inference based on the characteristic assistance data may include a key frame interval of a service data packet corresponding to the specified service flow. For example, the characteristic assistance data indicates whether the constant key frame interval exists in the specified service flow. If the characteristic assistance data indicates that the constant key frame interval exists, the specific value of the key frame interval, the interval in which the key frame interval, or the like may be further obtained through inference.

In some embodiments, the target characteristic parameter of the specified service flow obtained through inference based on the characteristic assistance data may include whether the service data packet set (that is, the PDU set) having the association and a characteristic of a service data packet included in the service data packet set exist in the specified service flow. The characteristic of the service data packet may include, for example, whether the service data packets in the PDU set are of equal importance, whether the content corresponding to the PDU set is recoverable after part of the service data packets in the PDU set are lost, and the like.

In some embodiments, if importance of the service data packets in the service data packet set is different and the content corresponding to the service data packet set is recoverable after part of the service data packets in the service data packet set are lost, the target characteristic parameter of the specified service flow obtained through inference may further include: a packet loss policy of the service data packet set, where the packet loss policy is configured for indicating to abandon transmission of a specified service data packet in the service data packet set during network congestion.

Specifically, if importance of service data packets in the service data packet set is different, it indicates that part of the service data packets cannot be lost. However, if part of the service data packets are lost, recovery of the entire service data packet set may not be affected. In this way, during network congestion, a service data packet with a low importance degree may be discarded based on the packet loss policy.

If the service data packets in the service data packet set are of equal importance, it indicates that the service data packets cannot be lost during transmission. If the packets are lost, the content corresponding to the service data packet set may be unrecoverable. Therefore, in a transmission process, if part of the service data packets are lost, all service data packets in the service data packet set need to be discarded.

In some embodiments, if the target characteristic parameter of the specified service flow may include the frame rate of the service data packet corresponding to the specified service flow, when performing inference on the frame rate of the service data packet corresponding to the specified service flow, the network-side network element may count, based on a transmission timestamp of the service data packet, a transmitted volume of the service data packet in unit time; and determine, based on the transmitted volume of the service data packet in the unit time, the frame rate of the service data packet.

In a possible implementation, if the unit time may be, for example, one second, based on the transmission timestamp of the service data packet, a transmitted volume of the service data packet in one second may be counted, and the transmitted volume of the service data packet in one second is used as the frame rate of the service data packet. Certainly, the unit time may alternatively be another value (such as one minute or thirty seconds). In this case, after the transmitted volume in the unit time is counted, the transmitted volume in the one second is calculated.

In some embodiments, if the target characteristic parameter of the specified service flow may include the key frame interval of the service data packet corresponding to the specified service flow, when performing inference on the key frame interval of the service data packet corresponding to the specified service flow, the network-side network element may determine, based on a size change rule of the service data packet corresponding to the specified service flow, a target data packet with a data volume greater than a set threshold, and use an interval between adjacent target data packets as the key frame interval. Specifically, because a data packet of a key frame is large, the data packet of the key frame may be determined based on a size of the data packet, and an interval between data packets of adjacent key frames is used as the key frame interval.

In some embodiments, the network-side network element may perform, based on the characteristic assistance data, characteristic parameter inference through a machine learning model, to obtain the target characteristic parameter. The network-side network element may train the machine learning model by using sample data, so that the machine learning model learns a prediction rule of a characteristic parameter of a service flow, to infer the characteristic parameter of the service flow through the trained machine learning model.

In some embodiments, the sample data for training the machine learning model may be characteristic assistance data of a service flow sample with a known characteristic parameter. During training, the characteristic assistance data of the service flow sample is inputted into the machine learning model for prediction, a prediction result of the machine learning model is compared with the known characteristic parameter of the service flow sample, and a model parameter of the machine learning model is adjusted based on a comparison result, so that a loss value between the prediction result of the machine learning model and the known characteristic parameter of the service flow sample meets a convergence condition. The machine learning model may be a convolutional neural network (CNN) model, a recurrent neural network (RNN) model, or the like.

Still refer to FIG. 3. S330: Process a service data packet of the specified service flow based on the inferred target characteristic parameter.

In some embodiments, the processing a service data packet of the specified service flow based on the inferred target characteristic parameter may be forwarding the service data packet based on the corresponding target characteristic parameter, or may be configuring the corresponding target characteristic parameter into a corresponding network element, for example, the UPF or a base station, to allocate an appropriate transmission resource for transmitting the service data packet of the specified service flow.

In some embodiments, if the target characteristic parameter of the specified service flow includes the periodicity of the service data packet corresponding to the specified service flow, a semi-persistent scheduling manner or a static scheduling manner may be configured for the specified service flow if data volumes transmitted through the service data packet in different periodicities are the same; and a dynamic scheduling manner is configured for the specified service flow if the data volumes transmitted through the service data packet in the different periodicities are inconstant.

Specifically, if the data volumes transmitted through the service data packet in the different periodicities are the same, the network-side network element (for example, an access network-side network element) may allocate a constant quantity of time-frequency resources to a terminal device during scheduling, and the scheduling manner may be selected as the simple semi-persistent scheduling manner or the static scheduling manner. If the data volumes transmitted through the service data packet in different periodicities are inconstant, during transmission and scheduling, a different quantity of time-frequency resources needs to be scheduled based on a requirement of a service flow and a network status, in other words, the dynamic scheduling manner needs to be used.

The technical solutions of the embodiments of this application are described above from a perspective of a network-side network element, and the implementation details of the technical solutions of the embodiments of this application are further described below from a perspective of an application-side network element.

FIG. 4 is a flowchart of a service data packet processing method according to an embodiment of this application. The service data packet processing method may be performed by an application-side network element, and the application-side network element is a network element at an application layer, for example, may be an application function (AF). Refer to FIG. 4. The service data packet processing method may include S410 to S430. Detailed descriptions are as follows.

S410: Obtain, based on feature information of a specified service flow, an initial characteristic parameter of the specified service flow.

The initial characteristic parameter may refer to a characteristic parameter that can be obtained by the application-side network element. In this case, the initial characteristic parameter may not be complete, for example, lacks values corresponding to some characteristic parameters.

In some embodiments, the feature information of the specified service flow may include at least one of the following: an encoding manner configured for the specified service flow, service data content corresponding to the specified service flow, and a configuration parameter of the specified service flow.

The encoding manner configured for the specified service flow may be, for example, one of the following: advanced video coding (AVC), high efficiency video coding (HEVC), and versatile video coding (VVC).

The service data content corresponding to the specified service flow may be, for example, one or more of the following: audio, video, and haptic (haptic information).

The configuration parameter of the specified service flow may include a parameter that may affect a characteristic of a service flow, for example, a constant rate factor (CRF) or an average rate.

S420: Generate, based on the obtained initial characteristic parameter, characteristic assistance data for the specified service flow, the characteristic assistance data including data associated with a characteristic of the specified service flow.

In some embodiments, the characteristic assistance data may include a part of characteristic parameters of the specified service flow, or may include indication information configured for determining a characteristic parameter of the specified service flow.

In a possible implementation, the characteristic assistance data may include whether a periodicity exists in the specified service flow. If the periodicity exists, the characteristic assistance data may further include a specific value of the periodicity or an interval in which the periodicity is located, or may further include whether data volumes transmitted in different periodicities are equal.

In a possible implementation, the characteristic assistance data may include, for example, whether a corresponding transmission rate exists in the specified service flow. If the transmission rate exists, the transmission rate may be a rate range, an average transmission rate, or the like.

In a possible implementation, the characteristic assistance data may include, for example, whether a constant frame rate exists in the specified service flow. If the constant frame rate exists, the characteristic assistance data may further include a specific value of a frame rate, an interval in which the frame rate is located, or the like.

In a possible implementation, the characteristic assistance data may include, for example, whether a constant key frame interval exists in the specified service flow. If the constant key frame interval exists, the characteristic assistance data may further include a specific value of the key frame interval, an interval in which the key frame interval is located, or the like.

In a possible implementation, the characteristic assistance data may include, for example, whether a service data packet set (that is, a PDU set) having an association exists in the specified service flow. If the PDU set exists, the characteristic assistance data may further include whether service data packets in the PDU set are of equal importance, whether content corresponding to the PDU set is recoverable after part of the service data packets in the PDU set are lost, and the like.

S430: Transmit the characteristic assistance data to a network-side network element, the characteristic assistance data being configured for assisting the network-side network element in performing characteristic parameter inference to obtain a target characteristic parameter of the specified service flow.

In a possible implementation, for a process in which the network-side network element infers the target characteristic parameter of the specified service flow based on the characteristic assistance data, refer to introduction in the embodiment shown in FIG. 3. This is not described again.

The technical solutions of the embodiments of this application are described above respectively from perspectives of a network-side network element and an application-side network element. Specifically, in the technical solutions of the embodiments of this application, the network-side network element can determine a characteristic parameter of a service flow under assistance of the application-side network element, thereby improving accuracy of the determined characteristic parameter of the service flow, facilitating optimization of transmission of the service flow, and improving processing efficiency of the service data packet. This avoids large dependence on the application-side network element due to a fact that the characteristic parameter of the service flow is provided by the application-side network element alone, and also avoids inaccuracy of the characteristic parameter due to a fact that inference is performed by the network-side network element alone. The implementation details of the technical solutions of the embodiments of this application are described again below using specific embodiments.

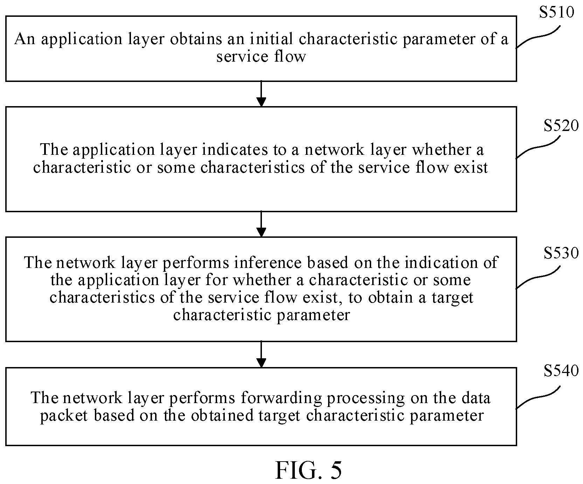

In the technical solutions of the embodiments of this application, an application layer (that is, an application-side network element) mainly provides a limited information indication for a network layer (that is, a network-side network element) based on a characteristic of a service flow such as a periodicity, a rate, a key frame interval, a frame rate, or a data packet set (a PDU set). The network layer infers, based on a part of indication characteristics indicated by the application layer, the remaining characteristics through a machine learning or artificial intelligence method, so that a complete target characteristic parameter is obtained, thereby implementing network layer processing of multimedia service data. For a specific processing procedure, refer to FIG. 5. The procedure includes the following operations:

S510: The application layer obtains an initial characteristic parameter of a service flow.

In some embodiments, the application layer may obtain the initial characteristic parameter of the service flow based on an encoding manner configured for the service flow, content or a configuration parameter of a service data packet, or the like.

In a possible implementation, the encoding manner includes but is not limited to AVC, HEVC, VVC, or the like; the content of the service data packet includes but is not limited to audio, video, haptic, and the like; and the configuration parameter includes but is not limited to a parameter that may affect the characteristic of the service flow, for example, a CRF or an average rate.

In some embodiments, a characteristic parameter of the service flow includes but is not limited to the periodicity, the rate, the key frame interval, the frame rate, a data packet set (the PDU set) characteristic, or the like; and the initial characteristic parameter may be an incomplete characteristic parameter, for example, lacks a value of the characteristic parameter.

In a possible implementation, a criterion for determining whether the periodicity exists in a data packet of the service flow may be whether the service flow generates specific data in a constant periodicity. Data volumes of the specific data may be the same or different. If the data volumes of the specific data are the same, a network side may allocate a constant quantity of time-frequency resources during scheduling and transmission, so that scheduling of a wireless access network side is simple, and a semi-persistent or even static scheduling policy is easily used. If the data volumes of the specific data are different, the network side needs to schedule, based on a requirement of the service flow, a different quantity of time-frequency resources during scheduling and transmission, and it is relatively difficult to use the semi-persistent or static scheduling policy.

In a possible implementation, the rate in the initial characteristic parameter of the service flow refers to whether a rate characteristic exists in the data packet of the service flow, and if the rate characteristic exists, the rate may be a rate range or an average rate. The average rate is an attribute of some encoder stream-pushing software, and the attribute can facilitate configuration and monitoring of a quality of service (QoS) policy by the network layer.

In a possible implementation, the frame rate in the initial characteristic parameter of the service flow refers to whether a constant frame rate exists in the service flow. If the constant frame rate exists, the frame rate may be a specific value, change range information of the frame rate (that is, an interval in which the frame rate is located), or the like.

In a possible implementation, the key frame interval in the initial characteristic parameter of the service flow refers to whether a constant key frame interval exists in the service flow. If the constant key frame interval exists, the key frame interval may be a specific value of the key frame interval, an interval in which the key frame interval is located, or the like.

In a possible implementation, the data packet set (the PDU SET) in the initial characteristic parameter of the service flow refers to whether a service data packet set (that is, a PDU set) having an association exists in the service flow. If the PDU set exists, the PDU set may be whether service data packets in the PDU set are of equal importance, whether content corresponding to the PDU set is recoverable after part of the service data packet in the PDU set are lost, and the like.

S520: The application layer indicates to the network layer whether a characteristic or some characteristics of the service flow exist.

In some embodiments, the application layer may indicate, to the network layer, one or more of the following characteristics of the service flow: the periodicity, the rate, the key frame interval, the frame rate, and the data packet set (the PDU set) characteristic.

In a possible implementation, the application layer may indicate to the network layer whether the periodicity exists in the data packet of the service flow. If an application side does not notify the network layer of a specific periodicity value, the network layer needs to obtain the specific periodicity value through an artificial intelligence or machine learning method.

In a possible implementation, the application layer may indicate to the network layer whether the rate characteristic exists in the data packet of the service flow. If the application side does not notify the network layer of a specific rate value, the network layer needs to obtain the specific rate value through the artificial intelligence or machine learning method.

In a possible implementation, the application layer may indicate to the network layer whether a constant or relatively constant key frame interval/frame rate exists in the data packet of the service flow. If the application side does not notify the network layer of a specific key frame interval/frame rate, the network layer needs to obtain the specific key frame interval/frame rate through the artificial intelligence or machine learning method.

In a possible implementation, the application layer may indicate to the network layer whether the data packet set characteristic exists in the data packet of the service flow. If the application side does not notify the network layer of a specific data packet set characteristic, the network layer needs to obtain the specific data packet set characteristic through the artificial intelligence or machine learning method.

S530: The network layer performs inference based on the indication of the application layer for whether a characteristic or some characteristics of the service flow exist, to obtain a target characteristic parameter.

In some embodiments, the network layer may learn and infer the periodicity of the service flow based on the indication provided by the application layer for whether the periodicity exists. Specifically, the periodicity of the service flow may include a periodicity of constant data volumes and a periodicity of variable data volumes.

In some embodiments, the network layer may infer the rate or the rate range based on the indication provided by the application layer for whether the constant rate exists or the rate is within a particular range.

In some embodiments, the network layer may obtain the key frame interval/frame rate based on the indication provided by the application layer for whether the constant or relatively constant key frame interval/frame rate exists.

In a possible implementation, inference of the frame rate may be detected based on a data packet rule. For example, for a service data packet based on a real-time transport protocol (RTP), a transmitted volume of the service data packet in unit time may be counted through a timestamp of a transmit end, and the frame rate of the service data packet is determined based on the transmitted volume of the service data packet in the unit time.

In a possible implementation, the network layer may also determine the key frame interval based on a size change rule of the data packet. For example, each instantaneous decoding refresh (IDR) frame has a large data packet during generation, that is, a maximum packet under a limitation of a maximum transmission unit (MTU). In this case, an interval between two large data packets may be used as the key frame interval.

S540: The network layer performs forwarding processing on the data packet based on the obtained target characteristic parameter.

In some embodiments, when processing the data packet, the network layer may process the data packet based on the PDU set characteristic, or may process the data packet by associating the PDU set characteristic with a parameter of the service data packet, for example, the periodicity, the rate, or the frame rate.

In a possible implementation, when processing the data packet based on the PDU set characteristic, if the service data packets in the PDU set are of equal importance, it indicates that the service data packets cannot be lost during transmission, and the content corresponding to the PDU set may be unrecoverable if the service data packets are lost. In this case, if part of the service data packets are lost, all service data packets in the service data packet set need to be discarded. If importance of the service data packets in the PDU set is different, it indicates that part of the service data packets cannot be lost. However, if part of the service data packets are lost, recovery of the entire PDU set may not be affected. In this way, during network congestion, a service data packet with a low importance degree may be discarded, to reduce, without affecting recovery of the service data packet set, impact caused by network congestion.

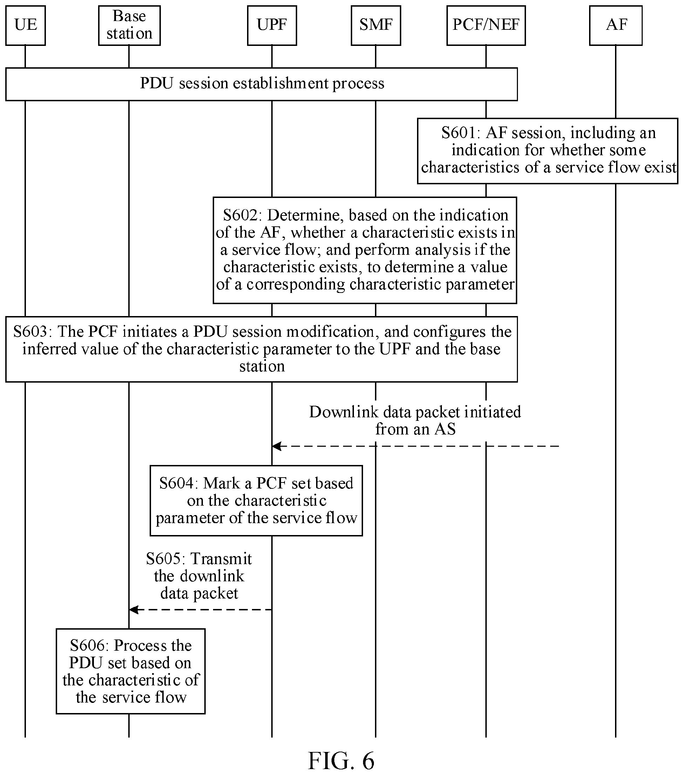

Based on the technical solutions of the foregoing embodiments, as shown in FIG. 6, a service data packet processing method according to an embodiment of this application includes the following operations.

S601: After a PDU session is established, an AF initiates an AF session with required QoS, including an indication for whether some characteristics of a service flow exist.

A PDU session establishment process may relate to a session management function (SMF).

S602: A PCF determines, based on the indication of the AF, whether a characteristic exists in the service flow; and performs analysis if the characteristic exists, to determine a value of a corresponding characteristic parameter.

The AF may provide indication information for the PCF in a control plane (where the indication information may be directly transmitted to the PCF, or may be first sent to a network exposure function (NEF) and then forwarded to the PCF by the NEF), to indicate a characteristic or some characteristics of the service flow. When performing analysis to determine the value of the characteristic parameter, the PCF may perform inference and analysis by using a parameter provided by a network element, for example, a UPF or a network data analyzer function (NWDAF).

S603: The PCF initiates a PDU session modification, and configures the inferred value of the characteristic parameter to the UPF and a base station.

S604: After the PCF configures the inferred value of the characteristic parameter to the UPF and the base station, if the UPF receives a downlink data packet initiated from an application server (AS), a PCF set is identified based on the characteristic parameter of the service flow.

For example, if a characteristic of the service flow indicates that a PDU set characteristic exists in a service data packet, service data packets belonging to a same PDU set may be identified. Specifically, a corresponding parameter may be added to user plane header information of the service data packet to indicate a relationship between service data packets, so that the service data packet belonging to the same PDU set may be identified through the user plane header information.

S605: The UPF transmits the downlink data packet to the base station.

S606: The base station processes the PDU set based on the characteristic of the service flow.

In some embodiments, based on the characteristic of the service flow, if data volumes transmitted through the service data packet in different periodicities are the same, the base station may allocate a constant quantity of time-frequency resources to a terminal device during scheduling, and the scheduling manner may be selected as a simple semi-persistent scheduling manner or a static scheduling manner. If the data volumes transmitted through the service data packet in the different periodicities are inconstant, during transmission and scheduling, the base station needs to schedule a different quantity of time-frequency resources based on a requirement of the service flow and a network status, in other words, a dynamic scheduling manner needs to be used.

In some embodiments, based on the characteristic of the service flow, if importance of service data packets in the PDU set is different and content corresponding to the service data packet set is recoverable after part of the service data packets in the PDU set are lost, the base station may discard a service data packet with a low importance degree during network congestion.

If the service data packets in the PDU set are of equal importance, it indicates that the service data packets cannot be lost during transmission. If the packets are lost, the content corresponding to the service data packet set may be unrecoverable. Therefore, in a transmission process, if part of the service data packets are lost, the base station needs to discard all service data packets in the service data packet set.

In the technical solutions of the embodiments of this application, a network-side network element can determine a characteristic parameter of a service flow under assistance of an application-side network element, thereby improving accuracy of the determined characteristic parameter of the service flow, facilitating optimization of transmission of the service flow, and improving processing efficiency of the service data packet. This avoids large dependence on the application-side network element due to a fact that the characteristic parameter of the service flow is provided by the application-side network element alone, and also avoids inaccuracy of the characteristic parameter due to a fact that inference is performed by the network-side network element alone.

The following describes apparatus embodiments of this application, and the apparatus embodiments may be configured for performing the service data packet processing method in the foregoing embodiments of this application. For details undisclosed in the apparatus embodiments of this application, refer to the embodiments of the foregoing service data packet processing method in this application.

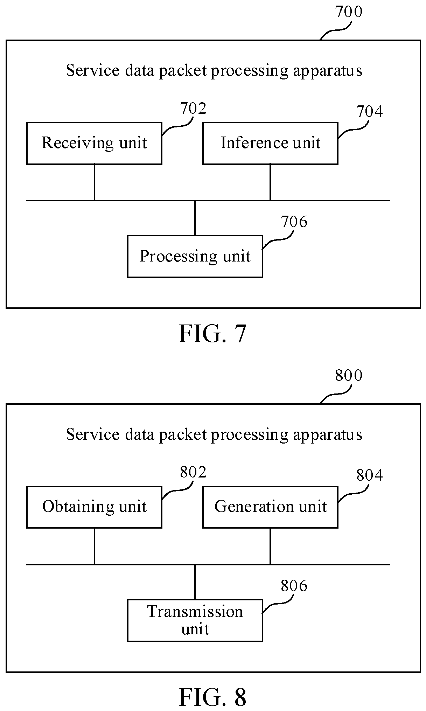

FIG. 7 is a block diagram of a service data packet processing apparatus according to an embodiment of this application. The processing apparatus may be arranged in a network-side network element, where the network-side network element may be, for example, a PCF.

Refer to FIG. 7. A service data packet processing apparatus 700 according to this embodiment of this application includes a receiving unit 702, an inference unit 704, and a processing unit 706.

The receiving unit 702 is configured to receive characteristic assistance data transmitted by an application-side network element for a specified service flow, the characteristic assistance data including data associated with a characteristic of the specified service flow; the inference unit 704 is configured to perform characteristic parameter inference characteristic parameter inference based on the characteristic assistance data, to obtain a target characteristic parameter of the specified service flow; and the processing unit 706 is configured to process a service data packet of the specified service flow based on the inferred target characteristic parameter.

In some embodiments of this application, based on the foregoing solutions, the target characteristic parameter of the specified service flow obtained through inference based on the characteristic assistance data includes at least one of the following:
a periodicity of the service data packet corresponding to the specified service flow;
a transmission rate of the service data packet corresponding to the specified service flow, where the transmission rate includes at least one of a rate range and an average rate;
a frame rate of the service data packet corresponding to the specified service flow;
a key frame interval of the service data packet corresponding to the specified service flow; and
whether a service data packet set having an association and a characteristic of a service data packet included in the service data packet set exist in the specified service flow.

In some embodiments of this application, based on the foregoing solutions, the characteristic of the service data packet included in the service data packet set includes at least one of the following: whether service data packets in the service data packet set are of equal importance, and whether content corresponding to the service data packet set is recoverable after part of the service data packets in the service data packet set are lost.

In some embodiments of this application, based on the foregoing solutions, if importance of the service data packets in the service data packet set is different and the content corresponding to the service data packet set is recoverable after part of the service data packets in the service data packet set are lost, the target characteristic parameter of the specified service flow further includes:
a packet loss policy of the service data packet set, where the packet loss policy is configured for indicating to abandon transmission of a specified service data packet in the service data packet set during network congestion.

In some embodiments of this application, based on the foregoing solutions, the target characteristic parameter of the specified service flow obtained through inference based on the characteristic assistance data includes a frame rate of the service data packet corresponding to the specified service flow.

The inference unit 704 is configured to count, based on a transmission timestamp of the service data packet, a transmitted volume of the service data packet in unit time; and determine, based on the transmitted volume of the service data packet in the unit time, the frame rate of the service data packet.

In some embodiments of this application, based on the foregoing solutions, the target characteristic parameter of the specified service flow obtained through inference based on the characteristic assistance data includes a key frame interval of the service data packet corresponding to the specified service flow.

The inference unit 704 is configured to |determine, based on a size change rule of the service data packet corresponding to the specified service flow, a target data packet with a data volume greater than a set threshold; and use an interval between adjacent target data packets as the key frame interval.

In some embodiments, based on the foregoing solutions, a characteristic parameter of the specified service flow includes a periodicity of the service data packet corresponding to the specified service flow. The processing unit 706 is further configured to configure a semi-static scheduling manner or a static scheduling manner for the specified service flow if data volumes transmitted through the service data packet in different periodicities are the same; and configure a dynamic scheduling manner for the specified service flow if the data volumes transmitted through the service data packet in the different periodicities are inconstant.

In some embodiments, based on the foregoing solutions, the inference unit 704 is configured to perform, based on the characteristic assistance data, characteristic parameter inference through a machine learning model, to obtain the target characteristic parameter of the specified service flow.

FIG. 8 is a block diagram of a service data packet processing apparatus according to an embodiment of this application. The processing apparatus may be arranged in an application-side network element, for example, may be arranged in an AF.

Refer to FIG. 8. A service data packet processing apparatus 800 according to this embodiment of this application includes an obtaining unit 802, a generation unit 804, and a transmission unit 806.

The obtaining unit 802 is configured to obtain, based on feature information of a specified service flow, an initial characteristic parameter of the specified service flow; the generation unit 804 is configured to generate, based on the obtained initial characteristic parameter, characteristic assistance data for the specified service flow, the characteristic assistance data including data associated with a characteristic of the specified service flow; and the transmission unit 806 is configured to transmit the characteristic assistance data to a network-side network element, the characteristic assistance data being configured for assisting the network-side network element in performing characteristic parameter inference to obtain a target characteristic parameter of the specified service flow.

In some embodiments of this application, based on the foregoing solutions, the feature information of the specified service flow includes at least one of the following: an encoding manner configured for the specified service flow, service data content corresponding to the specified service flow, and a configuration parameter of the specified service flow.

In some embodiments of this application, based on the foregoing solutions, the characteristic assistance data includes a part of characteristic parameters of the specified service flow.

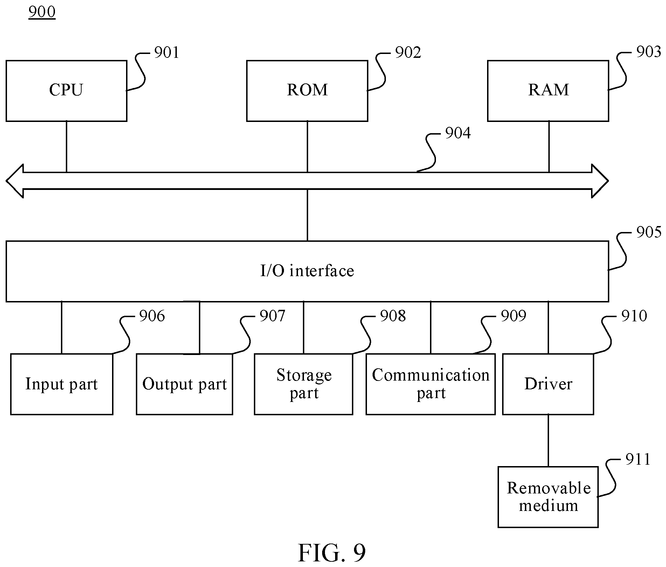

FIG. 9 is a schematic structural diagram of a computer system of an electronic device configured to implement an embodiment of this application.

A computer system 900 of the electronic device shown in FIG. 9 is merely an example, and does not constitute any limitation on functions and use ranges of the embodiments of this application.

As shown in FIG. 9, the computer system 900 includes a central processing unit (CPU) 901, which may perform various suitable actions and processing based on a program stored in a read-only memory (ROM) 902 or a program loaded from a storage part 908 into a random access memory (RAM) 903, for example, perform the method described in the foregoing embodiments. The RAM 903 further stores various programs and data required for system operations. The CPU 901, the ROM 902, and the RAM 903 are connected to each other through a bus 904. An input/output (I/O) interface 905 is also connected to the bus 904.

The following components are connected to the I/O interface 905: an input part 906 including a keyboard, a mouse, or the like; an output part 907 including a cathode ray tube (CRT), a liquid crystal display (LCD), a speaker, or the like; a storage part 908 including a hard disk, or the like; and a communication part 909 including a network interface card such as a local area network (LAN) card or a modem. The communication part 909 performs communication processing by using a network such as the Internet. A driver 910 is also connected to the I/O interface 905 as required. A removable medium 911, such as a magnetic disk, an optical disc, a magneto-optical disk, or a semiconductor memory, is installed on the driver 910 as required, so that a computer program read from the removable medium 911 is installed into the storage part 908 as required.

Particularly, according to an embodiment of this application, the processes described above by referring to the flowcharts may be implemented as computer software programs. For example, an embodiment of this application includes a computer program product. The computer program product includes a computer program stored in a computer-readable medium. The computer program includes a computer program configured to execute the method shown in the flowchart. In such an embodiment, the computer program may be downloaded and installed from a network through the communication part 909, and/or installed from the removable medium 911. When the computer program is executed by the CPU 901, the various functions defined in the system of this application are executed.

The computer-readable medium shown in the embodiments of this application may be a computer-readable signal medium or a computer-readable storage medium or any combination of the two. The computer-readable storage medium may be, for example, but is not limited to, an electric, magnetic, optical, electromagnetic, infrared, or semi-conductive system, apparatus, or component, or any combination of the above. A more specific example of the computer-readable storage medium may include but is not limited to: an electrical connection having one or more wires, a portable computer magnetic disk, a hard disk, a random access memory (RAM), a read-only memory (ROM), an erasable programmable read-only memory (EPROM), a flash memory, an optical fiber, a compact disk read-only memory (CD-ROM), an optical storage device, a magnetic storage device, or any appropriate combination thereof. In this application, the computer-readable storage medium may be any tangible medium including or storing a program, and the program may be used by or used in combination with an instruction execution system, an apparatus, or a device. In this application, the computer-readable signal medium may include a data signal transmitted in a baseband or as part of a carrier, and stores a computer-readable computer program. A data signal propagated in such a way may use a plurality of forms, including, but not limited to, an electromagnetic signal, an optical signal, or any appropriate combination thereof. The computer-readable signal medium may be further any computer-readable medium in addition to a computer-readable storage medium. The computer-readable medium may transmit, propagate, or transmit a program that is used by or used in conjunction with an instruction execution system, an apparatus, or a device. The computer program included in the computer-readable medium may be transmitted by using any suitable medium, including but not limited to: a wireless medium, a wire, or the like, or any suitable combination thereof.

The flowcharts and block diagrams in the accompanying drawings illustrate possible system architectures, functions and operations that may be implemented by a system, a method, and a computer program product according to various embodiments of this application. Each box in a flowchart or a block diagram may represent a module, a program segment, or a part of code. The module, the program segment, or the part of code includes one or more executable instructions used for implementing specified logic functions. In some implementations used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. Each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer program.

A related unit described in the embodiments of this application may be implemented in a software manner, or may be implemented in a hardware manner, and the unit described may also be set in a processor. Names of the units do not constitute a limitation on the units in a specific case.

According to another aspect, this application further provides a computer-readable medium. The computer-readable medium may be included in the electronic device described in the foregoing embodiments, or may exist alone and is not disposed in the electronic device. The computer-readable medium carries one or more computer programs, the one or more computer programs, when executed by the electronic device, causing the electronic device to implement the method described in the foregoing embodiments.

Although a plurality of modules or units of a device configured to perform actions are discussed in the foregoing detailed description, such division is not mandatory. Actually, according to the implementations of this application, the features and functions of two or more modules or units described above may be specifically implemented in one module or unit. On the contrary, the features and functions of one module or unit described above may be further divided to be embodied by a plurality of modules or units.

According to the foregoing descriptions of the implementations, a person skilled in the art may readily understand that the exemplary implementations described herein may be implemented by using software, or may be implemented by combining software and necessary hardware. Therefore, the technical solutions of the embodiments of this application may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the methods according to the embodiments of this application.

After considering the specification and practicing the implementations of this application, a person skilled in the art may easily conceive of other implementations of this application. This application is intended to cover any variations, uses, or adaptive changes of this application. These variations, uses, or adaptive changes follow the general principles of this application and include common general knowledge or common technical means in the art, which are not disclosed in this application.

This application is not limited to the precise structures described above and shown in the accompanying drawings, and various modifications and changes may be made without departing from the scope of this application. The scope of this application is merely limited by the appended claims.

## Claims

1. A service data packet processing method, performed by a network-side network element, the processing method comprising:
receiving characteristic assistance data transmitted by an application-side network element for a specified service flow, the characteristic assistance data comprising data associated with a characteristic of the specified service flow;
performing characteristic parameter inference characteristic parameter inference based on the characteristic assistance data, to obtain a target characteristic parameter of the specified service flow; and
processing a service data packet of the specified service flow based on the inferred target characteristic parameter.

2. The service data packet processing method according to claim 1, wherein the target characteristic parameter of the specified service flow obtained through inference based on the characteristic assistance data comprises at least one of the following:
a periodicity of the service data packet corresponding to the specified service flow;
a transmission rate of the service data packet corresponding to the specified service flow, wherein the transmission rate comprises at least one of a rate range and an average rate;
a frame rate of the service data packet corresponding to the specified service flow;
a key frame interval of the service data packet corresponding to the specified service flow; and
whether a service data packet set having an association and a characteristic of a service data packet comprised in the service data packet set exist in the specified service flow.

3. The service data packet processing method according to claim 2, wherein the characteristic of the service data packet comprised in the service data packet set comprises at least one of the following:
whether service data packets in the service data packet set are of equal importance, and whether content corresponding to the service data packet set is recoverable after part of the service data packets in the service data packet set are lost.

4. The service data packet processing method according to claim 3, wherein if importance of the service data packets in the service data packet set is different and the content corresponding to the service data packet set is recoverable after part of the service data packets in the service data packet set are lost, the target characteristic parameter of the specified service flow further comprises:
a packet loss policy of the service data packet set, wherein the packet loss policy is configured for indicating to abandon transmission of a specified service data packet in the service data packet set during network congestion.

5. The service data packet processing method according to claim 1, wherein the target characteristic parameter of the specified service flow comprises a frame rate of the service data packet corresponding to the specified service flow, and the performing characteristic parameter inference characteristic parameter inference based on the characteristic assistance data, to obtain a target characteristic parameter of the specified service flow comprises:
counting, based on a transmission timestamp of the service data packet, a transmitted volume of the service data packet in unit time; and
determining, based on the transmitted volume of the service data packet in the unit time, the frame rate of the service data packet.

6. The service data packet processing method according to claim 1, wherein the target characteristic parameter of the specified service flow comprises a key frame interval of the service data packet corresponding to the specified service flow, and the performing characteristic parameter inference characteristic parameter inference based on the characteristic assistance data, to obtain a target characteristic parameter of the specified service flow comprises:
determining, based on a size change rule of the service data packet corresponding to the specified service flow, a target data packet with a data volume greater than a set threshold; and
using an interval between adjacent target data packets as the key frame interval.

7. The service data packet processing method according to claim 1, wherein the target characteristic parameter of the specified service flow comprises a periodicity of the service data packet corresponding to the specified service flow, and the processing method further comprises:
configuring a semi-persistent scheduling manner or a static scheduling manner for the specified service flow if data volumes transmitted through the service data packet in different periodicities are the same; and
configuring a dynamic scheduling manner for the specified service flow if the data volumes transmitted through the service data packet in the different periodicities are inconstant.

8. The service data packet processing method according to any one of claims 1 to 7, wherein the performing characteristic parameter inference characteristic parameter inference based on the characteristic assistance data, to obtain a target characteristic parameter of the specified service flow comprises:
performing, based on the characteristic assistance data, characteristic parameter inference through a machine learning model, to obtain the target characteristic parameter of the specified service flow.

9. A service data packet processing method, performed by an application-side network element, the processing method comprising:
obtaining, based on feature information of a specified service flow, an initial characteristic parameter of the specified service flow;
generating, based on the obtained initial characteristic parameter, characteristic assistance data for the specified service flow, the characteristic assistance data comprising data associated with a characteristic of the specified service flow; and
transmitting the characteristic assistance data to a network-side network element, the characteristic assistance data being configured for assisting the network-side network element in performing characteristic parameter inference to obtain a target characteristic parameter of the specified service flow.

10. The service data packet processing method according to claim 9, wherein the feature information of the specified service flow comprises at least one of the following:
an encoding manner configured for the specified service flow, service data content corresponding to the specified service flow, and a configuration parameter of the specified service flow.

11. The service data packet processing method according to claim 9 or 10, wherein the characteristic assistance data comprises a part of characteristic parameters of the specified service flow.

12. A service data packet processing apparatus, arranged in a network-side network element, the processing apparatus comprising:
a receiving unit, configured to receive characteristic assistance data transmitted by an application-side network element for a specified service flow, the characteristic assistance data comprising data associated with a characteristic of the specified service flow;
an inference unit, configured to perform characteristic parameter inference characteristic parameter inference based on the characteristic assistance data, to obtain a target characteristic parameter of the specified service flow; and
a processing unit, configured to process a service data packet of the specified service flow based on the inferred target characteristic parameter.

13. A service data packet processing apparatus, arranged in an application-side network element, the processing apparatus comprising:
an obtaining unit, configured to obtain, based on feature information of a specified service flow, an initial characteristic parameter of the specified service flow;
a generation unit, configured to generate, based on the obtained initial characteristic parameter, characteristic assistance data for the specified service flow, the characteristic assistance data comprising data associated with a characteristic of the specified service flow; and
a transmission unit, configured to transmit the characteristic assistance data to a network-side network element, the characteristic assistance data being configured for assisting the network-side network element in performing characteristic parameter inference to obtain a target characteristic parameter of the specified service flow.

14. A computer-readable medium, having a computer program stored therein, the computer program, when executed by a processor, implementing the service data packet processing method according to any one of claims 1 to 11.

15. An electronic device, comprising:
one or more processors; and
a memory, configured to store one or more computer programs, the one or more computer programs, when executed by the one or more processors, causing the electronic device to implement the service data packet processing method according to any one of claims 1 to 11.

16. A computer program product, comprising a computer program, the computer program being stored in a computer-readable storage medium, and a processor of an electronic device reading and executing the computer program from the computer-readable storage medium, to cause the electronic device to perform the service data packet processing method according to any one of claims 1 to 11.
